# EUROPÄISCHE PATENTANMELDUNG

(11) **EP 2 404 831 A1**
(43) Veröffentlichungstag der Anmeldung: **11.01.2012**
(21) Anmeldenummer: 11004945.9
(22) Anmeldetag: 16.06.2011
(51) Int. Cl.: B65B 43/46

(54) **Verpackungssystem zum Befüllen eines Sammelbehälters mit Artikeln**

(30) Priorität: 22.06.2010 DE 102010024548
(71) Anmelder: MULTIVAC Sepp Haggenmüller GmbH & Co KG, 87787 Wolfertschwenden (DE)
(72) Erfinder: Beckel, Armin, 87700 Memmingen (DE); Gross, Wolfgang, 87779 Trunkelsberg (DE)
(74) Vertreter: Grünecker, Kinkeldey, Stockmair & Schwanhäusser

(57) **Zusammenfassung**

Die Erfindung bezieht sich auf ein Verpackungssystem und ein Verfahren zum Befüllen eines Sammelbehälters (12) mit Artikeln (7), wobei eine Führungsvorrichtung (9) eine erste räumliche Verteilung der Artikel von der Abgabeposition (8) bis in den Sammelbehälter (12) in eine zweite räumliche Verteilung verändert.

## Beschreibung

Die Erfindung bezieht sich auf ein Verpackungssystem gemäß dem Oberbegriff des Anspruchs 1 sowie auf ein entsprechendes Verfahren.

Bei Schalenverschließmaschinen, auch Traysealer genannt, werden mit Produkt gefüllte Schalen bzw. Trays auf einem Zuführband zugeführt und in eine Versiegelungsstation übergeben, in der die Schalen mit einer Deckelfolie mittels eines Siegelvorgangs verschlossen werden und einzelne Verpackungen entstehen. Anschließend werden die Verpackungen aus der Versiegelungsstation heraustransportiert und auf einem Transportband abgelegt. Über das Transportband werden sie dem nächsten Produktionsschritt zugeführt. Dies kann eine Etikettier- oder Wiegestation sein oder eine Prüfstation mit einem Metalldetektor. Die Übergabe der Schalen vom Zuführband in die Versiegelungsstation und die Übernahme der Verpackungen aus der Versiegelungsstation wird mittels eines Greifersystes ausgeführt.

Anwendungen, bei denen die Verpackungen nach der Versiegelungsstation z.B. eines Traysealers direkt in eine Endverpackung, Sammelverpackung oder Zwischenverpackung für einen Produktionsprozess wie Kühlen übergeben werden, sind häufig mit Robotern ausgeführt, die die Verpackungen aufnehmen, die auf dem Transportband aus dem Traysealer befördert wurden, und in der Sammelverpackung ablegen. Diese Ausführung erfordert ein aufwendiges und teures Übergabesystem und einen hohen Platzbedarf, der ähnlich einer Ausführung mittels Bedienpersonal zur manuellen Umsetzung ist.

Aufgabe der vorliegenden Erfindung ist es, ein Verpackungssystem und ein Verfahren zum Betrieb eines Verpackungssystems zur Verfügung zu stellen, die die vorstehend beschriebenen Nachteile beseitigen.

Diese Aufgabe wird gelöst durch ein Verpackungssystem mit den Merkmalen des Anspruchs 1 bzw. durch ein Verfahren zum Betrieb eines Verpackungssystems nach Anspruch 9. Vorteilhafte Weiterbildungen der Erfindung sind in den Unteransprüchen angegeben.

Das erfindungsgemäße Verpackungssystem umfasst vorzugsweise eine Verpackungsmaschine, z B. eine Schalenverschließmaschine, bei der direkt nach der Versiegelungsstation eine Führungsvorrichtung vorgesehen ist. Dabei umfasst das Verpackungssystem ein Greifersystem, das gleichzeitig eine Mehrzahl von Artikeln (bspw. mit Produkt gefüllte Schalen) aus einer Arbeitsstation, vorzugsweise einer Versiegelungsstation, heraustransportiert. Hierbei wird über das Greifersystem eine erste räumliche Verteilung der Artikel definiert. Vorzugsweise haben die Artikel einen Abstand zueinander, der sich auf Grund des Versiegelungsprozesses definiert. Für einen weiteren Produktionsverlauf in Sammelbehältern, vorzugsweise Eurokisten oder Endverpackungen, ist es vorteilhaft, die Abstände der Artikel zueinander zu reduzieren oder die Artikel überlappen zu lassen, um eine maximale Anzahl von Artikeln platzsparend in einem Sammelbehälter einzubringen. Erfindungsgemäß ist die Führungsvorrichtung derart ausgebildet, dass die Artikel von einer Abgabeposition des Greifers zu wenigstens einem Sammelbehälter führbar sind und in einer sich von der ersten räumlichen Verteilung der Artikel unterscheidenden zweiten räumlichen Verteilung in den Sammelbehälter gelangen. Die erfindungsgemäße Ausführung bringt den Vorteil einer sehr platzsparenden Anordnung ohne die Verwendung von Transportbändern und Robotern.

In der erfindungsgemäßen Ausführung ist die Führungsvorrichtung vorzugsweise statisch an einer Schalenverschließmaschine angeordnet, da die definierte erste räumliche Verteilung der Artikel über das Greifersystem vorgegeben ist.

Dabei weist die Führungsvorrichtung z. B. Leitbleche auf, die besonders platzsparend und kostengünstig sind und als Trichter für weitgehend fallende Artikel oder als Auflagebleche in Form von Rutschen für eine schräge Zuführung in den Sammelbehälter ausgeführt sind. Die Ausgestaltung der Leitbleche sorgt auf sehr einfache Weise für eine zweite räumliche Verteilung der Artikel im Sammelbehälter.

In einer weiteren Form ist die Führungsvorrichtung dynamisch ausgeführt, um sich verschiedenen Abmessungen von Artikeln, z.B. unterschiedliche Schalenbreiten, -längen oder -höhen, anzupassen. Auch die Massen und die Gleiteigenschaften der Artikel spielen eine große Rolle und sind in dieser erfindungsgemäßen Ausführung berücksichtigbar.

Zur Verstellung der Leitbleche ist zweckmäßig wenigstens ein Stellglied vorgesehen, das vorzugsweise über eine Steuerung der Verpackungsmaschine ansteuerbar ist, um entsprechend der unterschiedlichen Artikel oder auch Sammelbehälter automatisch die Führungsvorrichtung bezüglich der Anordnung der Leitbleche verändern zu können. Erfindungsgemäß sieht das Verpackungssystem in einer Variante eine Aufnahmevorrichtung für die Sammelbehälter vor, die die Lage des Sammelbehälters zur Führungsvorrichtung definiert und vorzugsweise mit einer Wechselhilfe für einen schnellen Austausch eines gefüllten Sammelbehälters gegen einen noch nicht gefüllten Sammelbehälter ausgerüstet ist. Ebenso ist die Aufnahmevorrichtung geeignet, verschiedene Abmessungen und Arten von Sammelbehältern aufzunehmen. Dabei kommen vorzugsweise genormte Eurokisten und Gitterboxen als Sammelbehälter und Kartonverpackungen als Endverpackung zum Einsatz.

Denkbar wäre auch eine Variante, bei der der Sammelbehälter in der Aufnahmevorrichtung automatisch gewechselt werden kann, um einen vollen Sammelbehälter durch einen leeren Sammelbehälter zu ersetzen. Beispielsweise könnten dazu leere Sammelbehälter aus einem Magazin oder einer Entstapeleinrichtung entnommen werden. Sensoren überwachen das Füllen des Sammelbehälters. Sobald ein vorgegebener Füllstand erreicht ist, wird der gefüllte Sammelbehälter abtransportiert und durch einen leeren ersetzt. Der gefüllte Sammelbehälter kann dabei an ein Transportband oder an ein Magazin abgegeben werden.

Das erfindungsgemäße Verpackungssystem sieht bevorzugt wenigstens einen Schieber vor, der Artikel aufnehmen kann, um diesen vorzugsweise kurz vor dem Sammelbehälter aufzunehmen oder zu stoppen. Somit ist es möglich, bei weiterhin kontinuierlich laufender Verpackungsmaschine einen gefüllten Sammelbehälter durch einen leeren Sammelbehälter zu ersetzen. Hierbei ist es auch ermöglicht, dass noch weitere durch die Führungsvorrichtung gelangende Artikel aufgenommen bzw. gestoppt werden, die nach dem Wechsel eines Sammelbehälters gemeinsam in diesen gelangen, sobald der Schieber diese Artikel freigibt. Der Schieber ist vorzugsweise mit der Steuerung des Verpackungssystems verbunden. Die Steuerung empfängt auch Signale über den Status der Aufnahmevorrichtung, d.h. eine Information ob und welcher Behältertyp sich an der Aufnahmevorrichtung befindet. Die Information kann über einen Barcode oder einen RFID-Tag, der auf dem Sammelbehälter angebracht ist, mittels einer Lese- oder Auswerteeinheit, die mit der Steuerung verbunden ist, erfolgen.

Die Leitbleche sind zur seitlichen Führung der Artikel vor allem bei weitgehend fallender Bewegung vorgesehen, während ggf. andere Leitbleche die Unterseite der Artikel zur weitgehend schräg gleitenden Bewegung aufnehmen und die Artikel ohne weitere Energiezuführung oder Kraftzuführung in den Sammelbehälter gelangen.

Das erfindungsgemäße Verfahren zum Befüllen eines Sammelbehälters mit Artikeln, vorzugsweise an oder in Verbindung mit einer Schalenverschließmaschine, sieht folgende Schritte vor. Ein Greifersystem transportiert Artikel, die in einer Arbeitsstation z. B. aus einer mit Produkt gefüllten Schale und einer Deckelfolie hergestellt wurden, aus der Arbeitsstation in einer ersten definierten räumlichen Verteilung heraus. Durch Öffnen der vorzugsweise wenigstens zwei Greiferarme des Greifersystems gibt das Greifersystem die Artikel an einer Abgabeposition frei. Von der Abgabeposition gelangen die Artikel mittels einer Führungsvorrichtung in einen Sammelbehälter, wobei sich die zweite räumliche Verteilung in dem Sammelbehälter von der ersten räumlichen Verteilung unterscheidet. Dieses Verfahren benötigt keine Transportbänder und Roboter zum Umsetzen von Artikeln und es führt zu einem günstigen sowie platzsparenden Verpackungssystem.

Die Artikel gelangen durch eigenständiges, gravitationsbedingtes Gleiten an und/oder auf der Führungsvorrichtung in den Sammelbehälter.

Das erfindungsgemäße Verpackungssystem ist auch mit einer Führungsvorrichtung denkbar, bei dem Rollen oder nicht angetriebene, frei laufende Transportbänder in Verbindung oder anstatt von Leitblechen vorgesehen sind, über die die Artikel von der Abgabeposition in den Sammelbehälter gelangen.

Die Leitbleche können bei einer mehrspurigen Verpackungsmaschine den in Transportrichtung seitlichen Abstand zueinander in äquivalenter Form der erfindungsgemäßen Führungsvorrichtung verändern.

Im Folgenden wird ein vorteilhaftes Ausführungsbeispiel der Erfindung anhand einer Zeichnung näher dargestellt.
Figur 1 zeigt eine schematische Ansicht einer Schalenverschließmaschine des erfindungsgemäßen Verpackungssystems,
Figur 2 zeigt eine schematische Seitenansicht eines erfindungsgemäßen Verpackungssystems,
Figur 3a zeigt eine schematische Draufsicht eines Greifersystems in geschlossener Stellung in der Abgabeposition,
Figur 3b zeigt eine schematische Draufsicht eines Greifersystems in offener Stellung in der Abgabeposition,
Figur 4 zeigt eine schematische Seitenansicht einer Variante des erfindungsgemäßen Verpackungssystems.

Gleiche Komponenten sind in den Figuren durchgängig mit gleichen Bezugszeichen versehen.

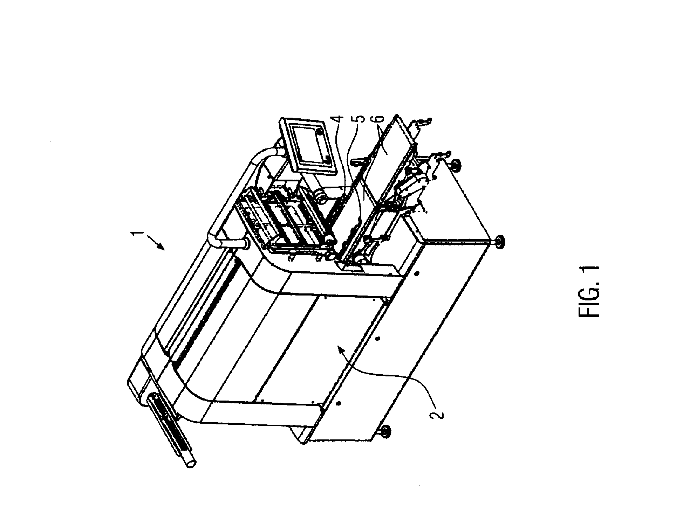

Figur 1 zeigt eine Schalenverschließmaschine 1 mit einer Arbeitsstation 2, die Schalen 3 mit einer nicht dargestellten Oberfolie versiegelt, und mit einem Greifersystem mit einem ersten Greiferarm 4 und einem zweiten Greiferarm 5, das die nicht in Figur 1 dargestellten Schalen von einem Zuführförderer 6 in die Arbeitsstation 2 bewegt.

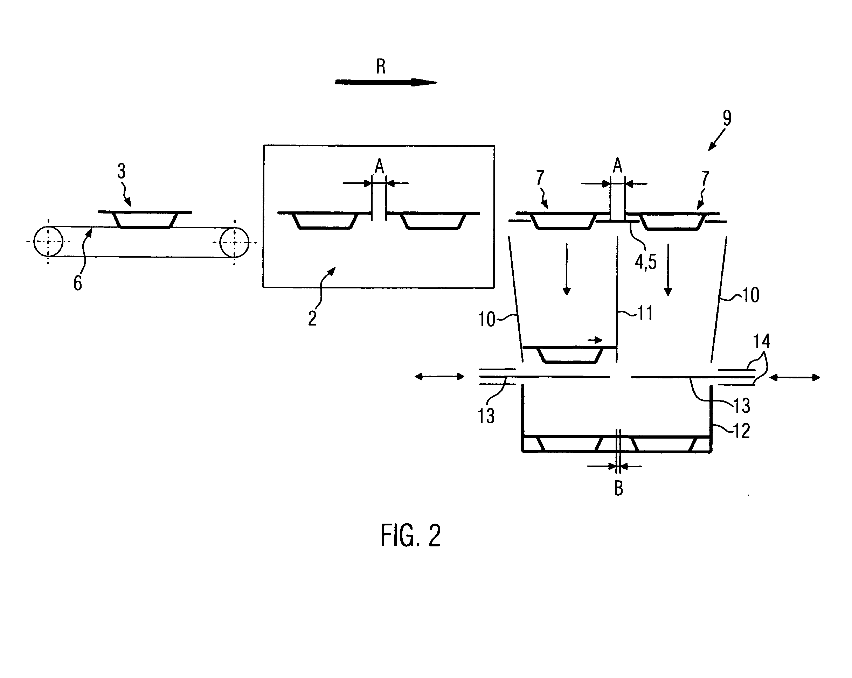

Figur 2 zeigt in Transportrichtung R eine Schale 3, die auf dem Zuführförderer 6 transportiert und mit dem nicht dargestellten Greifersystem der Arbeitsstation 2 zugeführt wird. Die mit der Oberfolie verschlossenen Schalen 3 werden gemeinsam als Artikel 7 mittels des Greifersystems mit zwei Greiferarmen 4, 5 aus der Arbeitsstation 2 in eine Abgabeposition 8 transportiert.

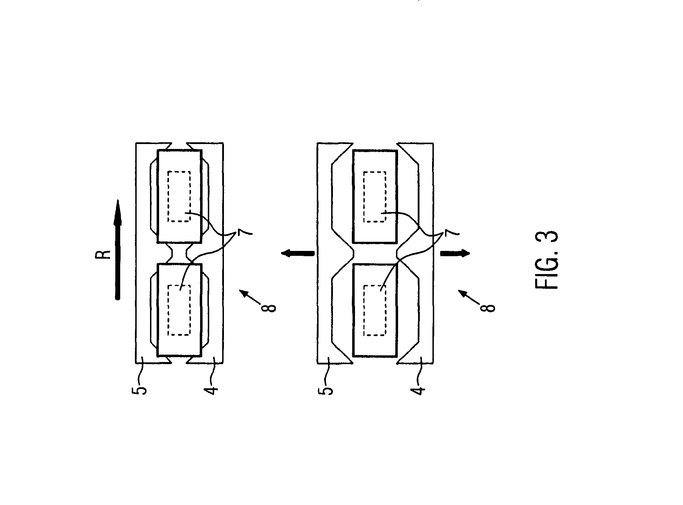

Die Greiferarme 4, 5 sind geschlossen, während sie die Artikel 7 in Transportrichtung R in die Abgabeposition 8 transportieren, wie dies in Figur 3a dargestellt ist. In Figur 3b ist dargestellt, wie sich in der Abgabeposition 8 das Greifersystem öffnet, indem sich die zwei Greiferarme 4, 5 von den Artikeln 7 wegbewegen und die Artikel 7 freigeben, damit die Artikel 7 in die Führungsvorrichtung 9 fallen können.

In Figur 2 ist des Weiteren die Führungsvorrichtung 9 mit Leitblechen 10, 11 dargestellt. Nach dem Öffnen der Greiferarme 4, 5 fallen die Artikel 7 nach unten in die Führungsvorrichtung 9. Dabei nähern sich die Artikel 7 durch die Führung der äußeren Leitbleche 10 in Richtung dem zentralen Leitblech 11 an und der erste definierte Abstand A reduziert sich auf einen zweiten Abstand B in dem Sammelbehälter 12 der Artikel 7 zueinander, um den Platz in dem Sammelbehälter 12 maximal auszunutzen.

Durch die Form der Greifarme 4, 5 nehmen die von diesen Greifarmen 4, 5 erfassten Artikel 7 eine definierte erste räumlich Verteilung an, während die Greifarme 4, 5 um die Artikel 7 geschlossen sind. In dieser ersten räumlichen Verteilung haben benachbarte Artikel 7 voneinander einen Abstand A. Durch die zueinander konvergente Anordnung der Leitbleche 10, 11 der Führungsvorrichtung 9 ändert sich dieser Abstand zwischen zwei Artikeln 7, während sich die Artikel 7 durch die Führungsvorrichtung 9 bewegen. Wenn die Artikel 7 in dem Sammelbehälter 12 zur Ruhe kommen, haben benachbarte Artikel 7 in horizontaler Richtung einen Abstand B voneinander. Damit wird eine zweite räumliche Verteilung B der Artikel 7 definiert, die sich von der ersten räumlichen Verteilung A unterscheidet. Bei der zweiten räumlichen Verteilung sind die Abstände B kleiner als die Abstände A bei der ersten räumlichen Verteilung. Folglich wird der knappe Raum im Sammelbehälter 12 besser ausgenutzt. Schieber 13, die jeweils in einer Führung 14 verschiebbar gelagert sind und durch ein nicht dargestelltes Stellglied verstellt werden, sind so lange in einer geöffneten Stellung und geben die Zuführung von Artikeln 7 in den Sammelbehälter 12 frei, bis der Sammelbehälter 12 durch einen neuen ersetzt wird. Somit werden die während des Wechselvorganges des Sammelbehälters 12 weiter zugeführten Artikel 7 mittels der Schieber 13 aufgenommen. Nach dem Wechsel des Sammelbehälters 12 werden die Schieber 13 mit einer schnellen Bewegung in die geöffnete Stellung zurückgezogen und die bis dahin aufgenommenen Artikel 7 gelangen in den Sammelbehälter 12.

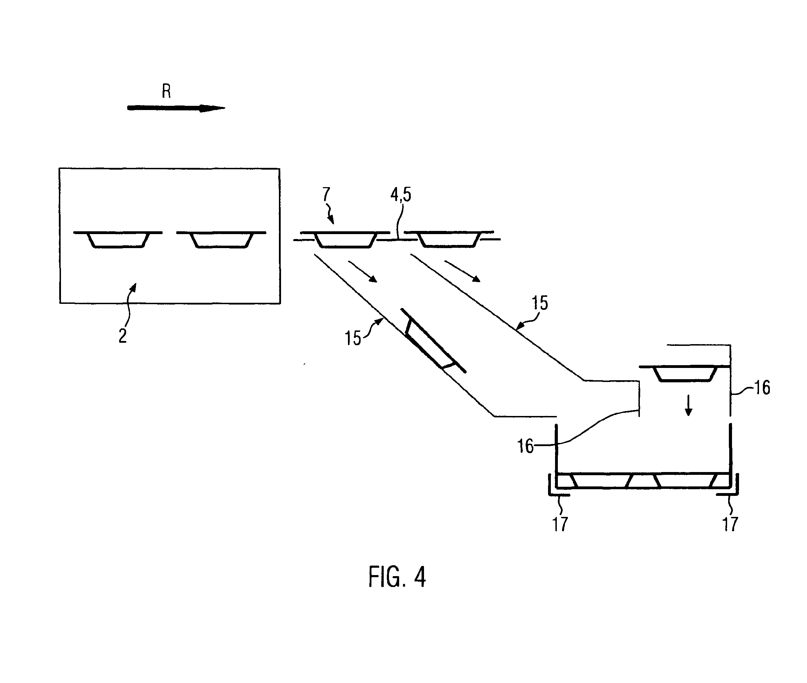

In Figur 4 ist eine Variante der Erfindung dargestellt. Bei dieser Ausführung fallen die Artikel 7 nach Öffnen der Greiferarme 4, 5 auf die Leitbleche 15. Hierbei gleiten die Artikel 7 mit der Bodenfläche in Richtung Sammelbehälter 12. Am Ende des Gleitweges bewegt sich der Artikel 7 gegen das Anschlagleitblech 16, mit dem die Lage des Artikels 7 in dem Sammelbehälter 12 definiert wird. Vor allem bei flachen Artikeln 7 ist dies eine Ausführung, um eine hohe Prozesssicherheit zu erhalten und ein Verkippen oder Verkanten der Artikel 7 zu verhindern. Die Leitbleche 15 können dafür sorgen, dass die Artikel 7 zeitlich versetzt zueinander und miteinander überlappend in den Sammelbehälter 12 fallen.

In Figur 4 ist auch eine Aufnahmevorrichtung 17 in Form zweier Aufnahmeschienen 17 dargestellt, über die die Lage des Sammelbehälters 12 zur Verpackungsmaschine 1 bzw. zur Führungsvorrichtung 9 in Transportrichtung R und in vertikaler Richtung definiert ist. Ein nicht dargestellter Anschlag in Richtung der Aufnahmeschienen 17 definiert die Lage in einer Richtung quer zur Transportrichtung R.

In den Figuren 1 bis 4 ist eine einspurige zweireihige Ausführung dargestellt. Es sind auch mehrspurige und mehrreihige Ausführungen denkbar. Dabei werden nicht nur Leitbleche für die Führung und Veränderung des Abstands A in Transportrichtung sondern auch weitere Leitbleche für die Führung und Veränderung des Abstands in Transportrichtung, benachbarter Artikel 7 vorgesehen.

Denkbar ist auch eine Variante, bei der die Leitbleche 10, 11, 15 mithilfe geeigneter Steilglieder verstellt werden können. Auf diese Weise kann die Führungsvorrichtung 9 an unterschiedliche Formen oder Größen von Sammelbehältern 12 angepasst werden.

## Patentansprüche

1. Verpackungssystem zum Befüllen eines Sammelbehälters (12) mit Artikeln (7), umfassend ein Greifersystem mit wenigstens zwei Greiferarmen (4, 5) zum gleichzeitigen Greifen einer Mehrzahl von Artikeln (7), und zum Transportieren der ergriffenen Artikel (7) aus einer Arbeitsstation (2), vorzugsweise einer Versiegelungsstation, zu einer Abgabeposition (8), wobei das Greifersystem während des Transports der Artikel (7) eine erste räumliche Verteilung der Artikel (A) definiert, **dadurch gekennzeichnet, dass** zwischen der Abgabeposition (8) und dem zu befüllenden Sammelbehälter (12) eine Führungsvorrichtung (9) vorgesehen ist, mittels derer die Artikel (7) von der Abgabeposition (8) des Greifersystems zum Sammelbehälter (12) führbar sind, wobei die Führungsvorrichtung (9) die Artikel (7) so führt, dass die Artikel (7) in einer sich von der ersten räumlichen Verteilung (A) unterscheidenden zweiten räumlichen Verteilung (B) in den Sammelbehälter (12) gelangen.

2. Verpackungssystem nach Anspruch 1, **dadurch gekennzeichnet, dass** die Führungsvorrichtung (9) statisch ist.

3. Verpackungssystem nach einem der Ansprüche 1 oder 2, **dadurch gekennzeichnet, dass** die Führungsvorrichtung (9) Leitbleche (10, 11, 16) aufweist.

4. Verpackungssystem nach Anspruch 1, **dadurch gekennzeichnet, dass** die Führungsvorrichtung (9) dynamisch ist.

5. Verpackungssystem nach Anspruch 3, **dadurch gekennzeichnet, dass** ein Stellglied zum Verstellen der Leitbleche (10, 11, 16) vorgesehen ist.

6. Verpackungssystem nach einem der vorangehenden Ansprüche, **dadurch gekennzeichnet, dass** eine Aufnahmeeinrichtung (17) für die Sammelbehälter (12) vorgesehen ist.

7. Verpackungssystem nach einem der vorangehenden Ansprüche, **dadurch gekennzeichnet, dass** wenigstens ein Schieber (13) vorgesehen ist, um Artikel (7) aufzunehmen.

8. Verpackungssystem nach einem der vorangehenden Ansprüche, **dadurch gekennzeichnet, dass** Leitbleche (15) zur Führung und/oder Auflage von einer Unterseite von Artikeln (7) vorgesehen sind.

9. Verfahren zum Befüllen eines Sammelbehälters (12) mit Artikeln (7), mit folgenden Schritten:
- Transportieren von Artikeln (7) aus einer Arbeitsstation (2) zu einer Abgabeposition (8) mittels eines Greifersystems, wenigstens zwei Greiferarme (4, 5) umfassend, die während des Transports eine erste räumliche Verteilung (A) der Artikel (7) definieren,
- Freigeben der Artikel (7) an der Abgabeposition (8) durch Öffnen der Greiferarme (4, 5),
- Gelangen der Artikel (7) von der Abgabeposition (8) in einen Sammelbehälter (12) mittels einer Führungsvorrichtung (9), wobei die Artikel im Sammelbehälter eine zweite räumliche Verteilung annehmen, und wobei sich die zweite räumliche Verteilung (B) in dem Sammelbehälter (12) von der ersten räumlichen Verteilung (A) unterscheidet.

10. Verfahren nach Anspruch 9, **dadurch gekennzeichnet, dass** die Artikel (7) durch gravitationsbedingtes Gleiten an oder in der Führungsvorrichtung (9) in den Sammelbehälter (12) gelangen.
